# EUROPEAN PATENT APPLICATION

(11) **EP 2 039 565 A2**
(43) Date of publication of application: **25.03.2009**
(21) Application number: 08380276.9
(22) Date of filing: 24.09.2008
(51) Int. Cl.: B60N 3/06

(54) **Footrest for vehicle seats**

(30) Priority: 24.09.2007 ES 200701936 U
(71) Applicant: Seat, S.A., 08760 Martorell, Barcelona (ES)
(72) Inventor: Mesa Medina, Santiago, 08760 Martorell Barcelona (ES); Candil Rodriguez, José Antonio, 08760 Martorell Barcelona (ES); Sanchez Rubio, Sergio, 08760 Martorell Barcelona (ES)
(74) Representative: Carvajal y Urquijo, Isabel

(57) **Abstract**

The invention relates to a footrest for vehicle seats, comprising a planar frame (1) which can be fixed to the structure of the vehicle, a parallel platform (2) forming the surface for resting feet, and a scissor mechanism (3) connecting the platform and frame and useful as a means for raising and lowering the platform; the two arms (10,11) of the scissor mechanism being connected at one of their ends to the platform and frame by means of fixed hinges (13,14), whereas at the opposite end they are connected with said platform and frame by means of hinges of pins (15,16) sliding along parallel straight slits (17,18) made in the platform and frame, the platform including locking means for locking the pin of one of the scissor arms at different points along said slit.

## Description

### Field of the Invention

The present invention relates to a footrest for vehicle seats, designed as a raisable floor, for making it easier for short passengers to rest their feet and which is designed to be completely integrated in the structure of the vehicle floor, further having a cavity for depositing objects.

The footrest of the invention is especially indicated for the rear seats of the vehicle, although it can also be applied in front seats, provided that it is allowed by design specifications.

### Background of the Invention

Footrests which are used in the rear seats of automobiles are currently known, which consist of a complementary module which is unfolded for the placement of the feet of the user. These devices are usually fixed to an element of the automobile, normally the backrest of the front seats or the bottom part of the rear seats, and they are activated by means of the rotation of a pin taking the footrest from its closed position to its open position. In other words, they are based on the lowering of a physical element which is located between the front and rear seats and which leaves less space for the legs of the users, especially when it is not used as a footrest, and which can furthermore make the movement of passengers difficult.

The system of rotation or lowering on a pin can allow several opening settings, but it is conditioned by the type of anchoring which prevents the movement, once the feet are resting, and by the inclination of the actual footrest, which does not remain in a position parallel to the sole of the feet, but rather with an inclination given by the rotation of the system. Another drawback of the described footrest system is the aesthetic impact of these devices, which are not integrated with the interior of the vehicle.

### Description of the Invention

The object of the present invention is to eliminate the problems set forth by means of a footrest which is completely integrated in the structure of the vehicle and which can occupy a lower limit position and a raised position with a selectable height, in the first of which it is flush with the surface of the floor, such that it does not take away space from the compartment, it is not an obstacle for the movement of passengers and does not cause any aesthetic impact of the interior of the vehicle, whereas in the raised position, at the selected height, it defines a horizontal surface for the occupants of the rear seats to rest their feet.

The footrest of the invention allows having a raisable platform which is perfectly integrated with the floor of the vehicle seats, obtaining a homogeneous surface which allows the correct movement of the legs of the occupants and which is useful for short passengers who cannot comfortably rest their feet on the vehicle floor. The system has an appropriate anchoring system allowing a wide range of floor settings in order to be adapted to the needs of the occupants. Another advantage of the proposed system is that it offers a complementary carrier compartment cavity, which can be used when the footrest is in use and without taking up additional space in the interior of the vehicle.

The footrest of the invention is formed by a planar frame, which is fixed to the structure of the vehicle, a parallel platform forming the surface for resting feet, and a scissor mechanism connecting the platform and frame and useful as a means for raising and lowering said platform.

The scissor mechanism is a double mechanism with two pairs of parallel hinged arms, located between opposite sides of the platform and frame.

The two arms of each side of the scissor mechanism are connected at one of their ends to the platform and frame by means of fixed hinges, whereas at the opposite end they are connected with said platform and frame by means of hinges of pins sliding along parallel straight slits which are made in the platform and frame. One of these slits has locking means for locking the pin at different points along the slit, which are useful for selecting different stable heights of the platform.

When the scissor mechanism is folded, the platform is located on the frame, closing it and concealing it, in which position the assembly is perfectly integrated with the mat of the vehicle, achieving a homogeneous surface improving the ergonomics of the vehicle seats where the footrest is installed, thus allowing tall occupants to move comfortably.

The frame of the footrest has means for fixing to the structure of the frame, which can be formed by lower tabs provided with a hole for the passage of the anchoring elements, of screws, for example.

The platform is provided with a central opening with a practicable cover. In coincidence with the contour of this opening, the platform can have internally fixed thereto a bag with a flexible wall, useful as a carrier compartment means.

The aforementioned locking means of the platform are formed by a series of grooves parallel to the adjacent hinge pin, this pin being in turn formed by a cylindrical core with a diameter approximately equal to that of the grooves, which core is assembled on the corresponding end of the scissor arm and which can be supported on any one of the grooves to define a locking point. The grooves can be formed in a plate which is assembled in the platform by means of sliding guides to facilitate its assembly.

The movement for raising and lowering the floor is carried out by means of actuating the platform, pulling in an upward direction or pressing in a downward direction. When the floor reaches the desired height, the core forming the aforementioned sliding pin will be positioned on one of the mentioned grooves upon reaching the desired height, the platform and therefore the floor being immobilized. When the floor is to be lowered, the anchorings must simply be released, slightly raising the platform to remove the cylindrical core from the corresponding groove, then pressing the platform in a downward direction until it is supported in the frame.

### Brief Description of the Drawings

A more detailed description of the invention is made below with reference to the attached drawings in which a non-limiting embodiment is shown.

In the drawings:
Figure 1 shows a perspective view of a footrest formed according to the invention, in a folded position and with the access cover closed.
Figure 2 is a view similar to Figure 1, with the hole cover open.
Figure 3 is a perspective view of the footrest of the invention, in a raised position and with the hole cover closed.
Figure 4 is a view similar to Figure 3, with the hole cover open.
Figure 5 is a side view of the footrest of the invention in the raised position of Figure 3.
Figure 6 is a partial longitudinal section of the footrest, showing the raising mechanism.
Figure 7 is a perspective view of the locking means of the footrest of the invention.
Figure 8 is a partial lower perspective view of the footrest, showing the system for assembling the locking means.

### Description of a Detailed Embodiment

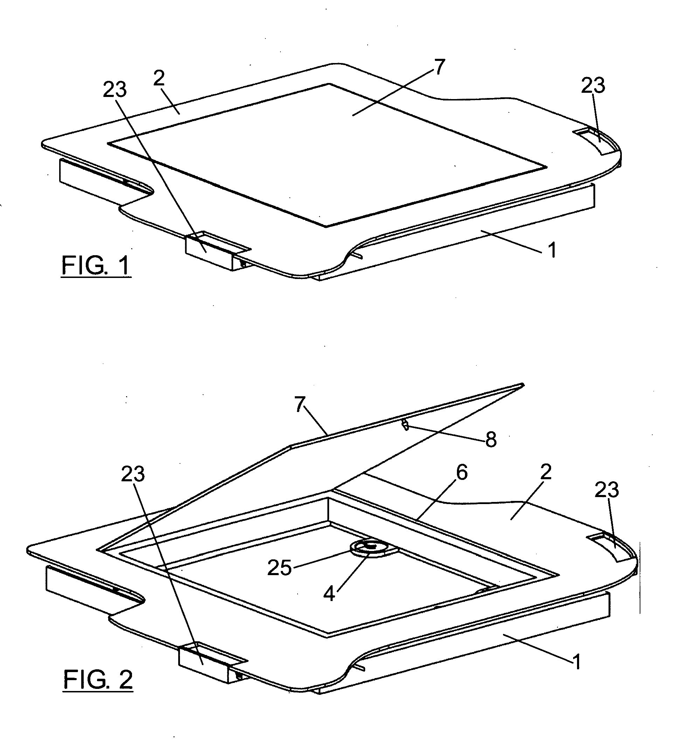

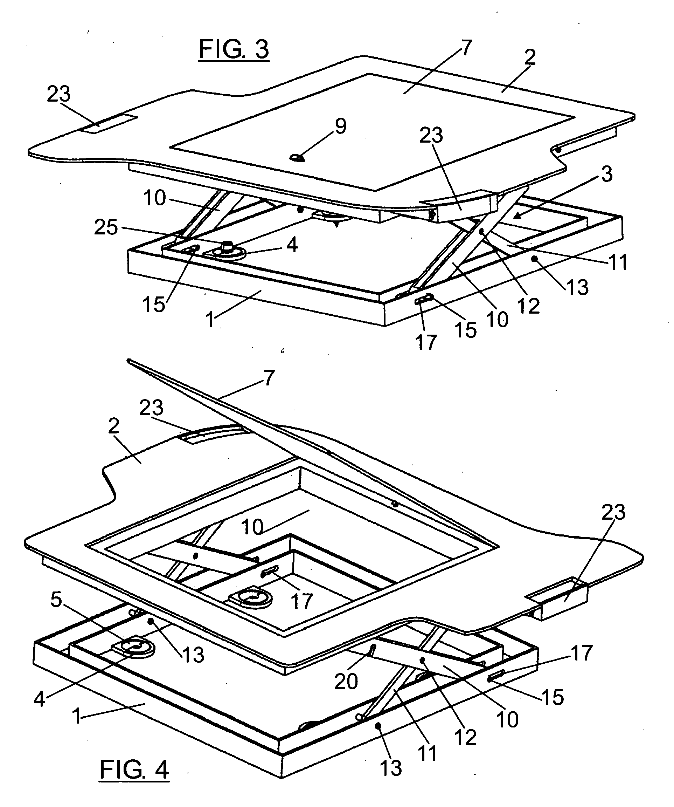

The footrest of the invention is shown in a folded position in Figures 1 and 2 and in a raised position in Figures 3 and 4.

This footrest is formed by a planar frame 1, a parallel platform 2 which will form the surface for resting feet, and by a scissor mechanism 3 connecting the platform and frame and which will be useful as a means for raising and lowering said platform.

The frame 1 is anchored to the vehicle floor, for which it has tabs 4 with a hole for the passage of screws or anchoring elements 5.

The platform 2 has a central opening 6 which is closed by means of a practicable cover 7 and which can have a lower peg 8 for anchoring in the closed position. At the upper part, the platform 7 can have an indentation or means 9 facilitating the pulling of the lid to open it.

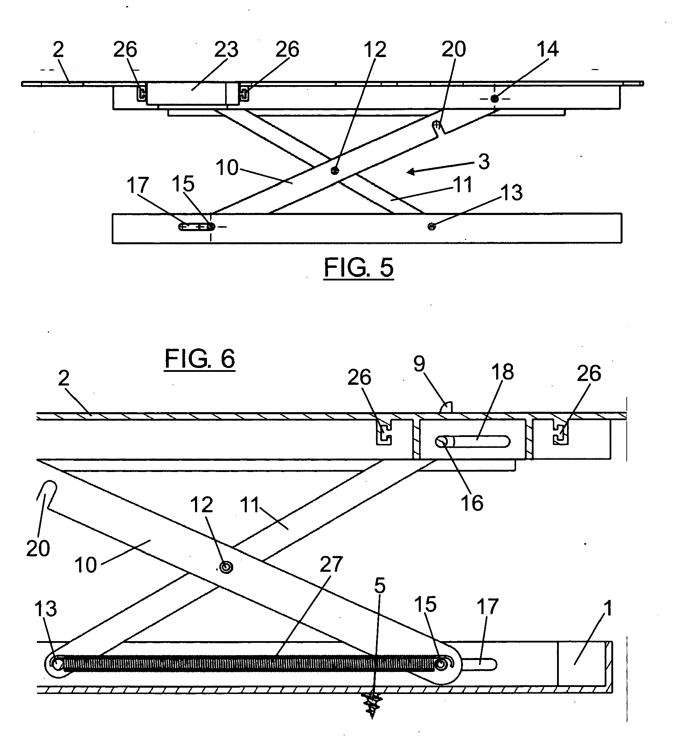

The scissor mechanism includes two pairs of arms 10 and 11 which are hinged at an intermediate point by means of a pin 12. The arms 10 and 11 are hinged at one end to the frame 1 and platform 2 by means of fixed rotating pins 13 and 14, as can be better observed in Figure 5.

At the opposite end, the arms 10 and 11 of each pair are hinged with the frame 1 and platform 2 by means of pins 15 and 16, Figures 5 and 6, sliding along parallel slits 17 and 18, made along the frame 1 and platform 2.

With the mentioned constitution, the platform 2 can occupy a maximum raised position, in which the sliding pins 15 and 16 are supported against the inner edge of the slits 17 and 18, and a folded position, shown in Figures 1 and 2, in which the same pins 15 and 16 will be supported on the outer edge of the slits 17 and 18.

The arms 10 and 11 will have, if necessary, notches 20 from their lower edge, Figure 5, to be supported on the pin 13 in the lower folded position.

The footrest of the invention further has means which allow selecting and securing the platform 2 at different heights.

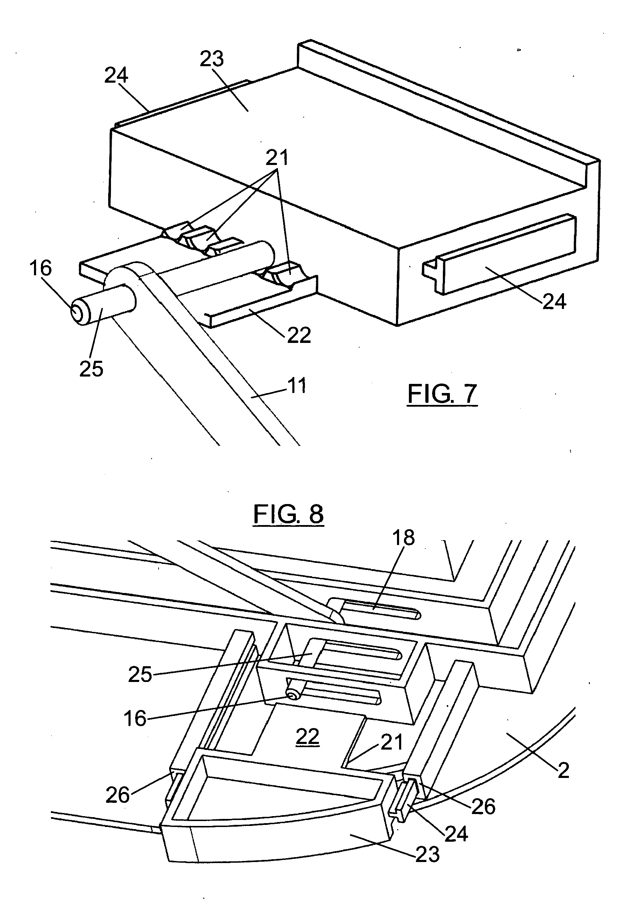

This mechanism is shown in Figure 7 and is formed by a series of grooves 21 parallel to the hinge pin 16 between the arm 11 and the platform 2, which grooves can be made in an integral plate 22 of a box 23 provided with side guides 24 for its assembly, as will be described with reference to Figure 8.

The hinge pin 16 of the arm 11 is formed by a cylindrical core 25 with a diameter approximately equal to that of the grooves 21 and which is assembled on the corresponding end of the arm 19. By selecting the groove 21 on which the core 25 is supported, the position to which the platform 2 is raised is fixed, being located in any of the selected heights in a horizontal position. To vary the height of the platform, it will be enough to slightly raise it to remove the core 25 from the corresponding groove 21 and move said core towards the desired groove, lowering or raising the platform 2 at the same time.

Figure 8 shows a lower perspective view of the box 23 and plate 22 of Figure 7. Both this figure and Figure 6 show how the platform 2 has at the lower part tracks 26 in which the guides 24 of the box 23, carrying the plate 22 and channels 21 for the support of the core 25, can be coupled by sliding.

As can be seen in Figures 1 or 4, the box 23 forming or defining the locking mechanism is arranged in the two sides of the footrest, each of them for one of the pairs of arms 10 and 11 forming the scissors.

As can be seen in Figures 3 and 4, the frame 1 can be designed as a framing with grooved sides, between the walls of which the ends of the arms 10 and 11 forming the scissors are introduced for their hinging. In the same way, the platform 2 can have on its lower surface a framing with a double wall, between which the corresponding ends of the scissor arms are introduced.

As can be observed in Figure 6, to facilitate the unfolding or raising of the platform 2, the pins 13 and 15 hinging the arms 11 and 10 with the frame 1 can be connected by means of a tension spring 27.

The platform 2 can carry a lower bag, fixed in the contour of the opening 6, which will be useful as a carrier compartment receptacle when the platform 2 is in a raised position, shown in Figures 3 and 4.

The length of the slits 17 made in the frame 1 limit the movement of the pin 15 and therefore the raising of the platform 2.

As has already been indicated, the footrest of the invention is especially designed for rear or back seats of automotive vehicles, although it can also be installed in front seats, provided that it is allowed by design specifications.

## Claims

1. A footrest for vehicle seats, **characterized in that** it comprises a planar frame which can be fixed to the structure of the vehicle, a parallel platform forming the surface for resting feet, and a scissor mechanism connecting the platform and frame and useful as a means for raising and lowering the platform; the two arms of the scissor mechanism being connected at one of their ends to the platform and frame by means of fixed hinges, whereas at the opposite end they are connected with said platform and frame by means of hinges of pins sliding along parallel straight slits made in the platform and frame, the platform including locking means for locking the pin of one of the scissor arms at different points along said slit.

2. The footrest according to claim 1, **characterized in that** the frame has means for fixing to the structure of the frame, formed by lower tabs provided with a hole for the passage of anchoring elements.

3. The footrest according to claim 1, **characterized in that** the platform has a central opening with a practicable cover.

4. The footrest according to claim 3, **characterized in that** the platform has a bag with a flexible wall internally fixed thereto in the contour of the mentioned opening.

5. The footrest according to claim 1, **characterized in that** the locking means are formed by a series of grooves parallel to the adjacent hinge pin, and the pin is formed by a cylindrical core with a diameter approximately equal to that of the grooves, which core is assembled on the corresponding end of the scissor arm and is supported on any one of said grooves to define a locking point.

6. The footrest according to claim 5, **characterized in that** the mentioned grooves.are located in a plate which is assembled in the platform by means of sliding guides.

7. The footrest according to claim 1, **characterized in that** the hinge pin of the lower end of the scissor arms are connected by means of a tension spring.

8. The footrest according to claim 1, **characterized in that** the scissor mechanism includes two pairs of arms hinged to one another at an intermediate point according to aligned pins and at their ends to the platform and frame.
